# FASCICULE DE BREVET EUROPEEN

(11) **EP 1 193 147 B1**
(45) Date de publication et mention de la délivrance du brevet: **09.06.2004**
(21) Numéro de dépôt: 01123009.1
(22) Date de dépôt: 26.09.2001
(51) Int. Cl.: B60R 25/04

(54) **Ensemble destiné a échanger des données dont certaines sont représentatives d'au moins un utilisateur autorisé du véhicule**
Vorrichtung zum Austausch von Daten, die teils repräsentativ für mindestens einen berechtigten Kraftfahrzeug-Benutzer sind
Exchange device for data which is partly representative of at least one authorized user of an automotive vehicle

(30) Priorité: 27.09.2000 FR 0012259
(43) Date de publication de la demande: 03.04.2002
(73) Titulaire: VALEO SECURITE HABITACLE S.A.S., 94042 Créteil Cédex (FR)
(72) Inventeur: Batty, Raoul, 58000 Nevers (FR); Lesueur, Guillaume, 58000 Nevers (FR)
(74) Mandataire: Hervouet, Sylvie

(56) Documents cités:
- DE-A- 19 853 075
- DE-A- 19 939 733

## Description

La présente invention concerne un ensemble pour véhicule automobile destiné à échanger des données dont certaines sont représentatives d'au moins un utilisateur autorisé du véhicule selon la préambule de la revendication 1, comme connue par DE-A-19 853 075.

On connaît aussi déjà dans l'état de la technique, notamment d'après FR-A-2 779 563 (FR-98 07250) et FR-A-2 786 297 (FR-98 14571), un ensemble pour véhicule automobile destiné à échanger des données dont certaines sont représentatives d'au moins un utilisateur autorisé du véhicule, du type comprenant un bascule de blocage montée rotative entre deux positions stables coopérant avec des moyens de rappel élastique.

Des ensembles de ce type sont avantageusement utilisés pour assurer une fonction antivol d'un véhicule automobile. A cet effet, l'unité fixe d'échange de données est agencée dans l'habitacle du véhicule et assure la fonction antivol en traitant des données notamment celles représentatives de l'utilisateur autorisé.

Lorsque l'unité fixe d'échange de données a reconnu l'utilisateur autorisé celui-ci fait démarrer le moteur du véhicule habituellement au moyen d'un bouton, séparé de l'unité fixe, agencé dans une planche de bord ou une console de l'habitacle. L'opération de démarrage du véhicule requiert donc l'introduction de l'organe portatif dans le tunnel de l'unité fixe pour identification de l'utilisateur puis l'actionnement du bouton de démarrage. L'arrêt du moteur du véhicule s'effectue également au moyen du bouton de démarrage.

L'invention a notamment pour but de simplifier l'opération de démarrage du véhicule et de réduire le nombre d'organes à manipuler pour réaliser cette opération.

A cet effet, l'invention a pour objet un ensemble pour véhicule automobile destiné à échanger des données dont certaines sont représentatives d'au moins un utilisateur autorisé du véhicule, du type précité, caractérisé en ce que l'unité fixe d'échange de données comprend également :
- un contacteur électrique d'activation d'un état de démarrage ou d'arrêt d'un moteur du véhicule, dit contacteur de démarrage, l'organe portatif étant déplaçable longitudinalement dans le tunnel jusqu'à une position instable d'actionnement du contacteur de démarrage située au delà de la position stable par rapport à l'extrémité d'accès du tunnel, et
- des moyens de rappel élastique de l'organe portatif depuis sa position instable vers sa position stable.

Suivant d'autres caractéristiques de cet ensemble:
- l'unité d'échange de données comprend une bascule de blocage de l'organe portatif dans le tunnel, montée rotative dans l'unité d'échange de données autour d'un axe transversal à la direction longitudinale de déplacement de l'organe portatif, munie d'une partie interne au tunnel, coopérant avec l'organe portatif dans ses positions stable et instable, et d'une partie externe au tunnel, les moyens de rappel comprenant un ressort de rappel à effet angulaire agissant autour de l'axe de rotation de la bascule ;
- le ressort de rappel a également un effet de poussée parallèlement à l'axe de rotation de la bascule pour le positionnement axial de cette bascule ;
- la bascule est déplaçable entre deux positions respectivement de libération de l'organe portatif et de coopération avec cet organe portatif vers chacune desquelles elle est rappelée élastiquement par un ressort bistable, le ressort de rappel étant précontraint et exerçant sur la bascule un effort opposé et supérieur à celui du ressort bistable, lorsque l'organe portatif est dans sa position stable ;
- le ressort de rappel exerce un effort deux à trois fois supérieur à celui du ressort bistable, lorsque l'organe portatif est dans sa position stable ;
- le contacteur électrique de démarrage est actionné par l'organe portatif par l'intermédiaire de la partie externe de la bascule de blocage ;
- le contacteur électrique d'activation d'un état de marche du véhicule est actionné par l'organe portatif par l'intermédiaire de la partie externe de la bascule de blocage ;
- l'unité d'échange de données comprend un contacteur électrique, extérieur au tunnel, d'activation d'un état de mise sous tension d'accessoires du véhicule actionné par l'organe portatif par l'intermédiaire d'un élément de commande faisant saillie dans le tunnel.

L'invention sera mieux comprise à la lecture de la description qui va suivre, donnée uniquement à titre d'exemple et faite en se référant aux dessins dans lesquels :
- la figure 1 est une vue en perspective de l'ensemble pour l'échange de données selon l'invention ;
- la figure 2 est une vue en perspective éclatée de l'ensemble pour l'échange de données représenté sur la figure 1 ;
- la figure 3 est une vue en perspective d'organes internes de l'ensemble pour l'échange de données représenté sur la figure 1, le point de vue de la figure 3 étant opposé à celui de la figure 1 ;
- les figures 4 et 5 sont des vues en coupe de l'ensemble pour l'échange de données représenté sur la figure 1, respectivement suivant les lignes 4-4 de la figure 1 et 5-5 de la figure 4 ;
- la figure 6 est une vue de côté de l'organe portatif et d'un organe de diffusion de lumière porté par l'unité fixe ;
- la figure 7 est une vue de dessus de l'organe portatif représenté sur la figure 1, suivant la flèche 7 de la figure 6 ;
- la figure 8 est une vue en coupe suivant la ligne 8-8 de la figure 6.

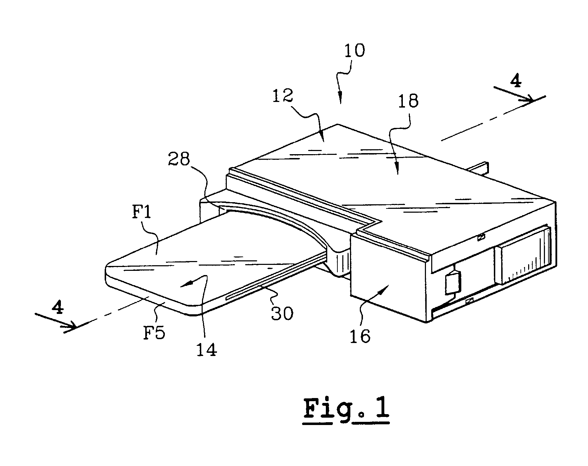

On a représenté sur les figures 1 à 5 un ensemble pour l'échange de données selon l'invention, désigné par la référence générale 10.

Cet ensemble comprend une unité fixe 12 d'échange de données agencée dans un véhicule automobile, par exemple dans une planche de bord ou une console de l'habitacle de ce véhicule.

L'ensemble 10 comprend également un organe portatif 14 ou badge destiné à être logé dans l'unité fixe 12.

L'unité fixe 12 assure une fonction d'antivol par traitement de données dont certaines, contenues dans l'organe portatif, sont représentatives d'au moins un utilisateur autorisé du véhicule. Les données représentatives de l'utilisateur sont stockées dans l'organe portatif 14 et traitées par l'unité fixe 12 à l'aide de moyens classiques.

Dans ce qui suit, un élément est qualifié de proximal lorsqu'il est proche de la main de l'utilisateur introduisant l'organe portatif dans l'unité fixe. Dans le cas contraire, l'élément est qualifié de distal. Par ailleurs, la direction générale de déplacement de l'organe portatif dans l'unité fixe est qualifiée de longitudinale.

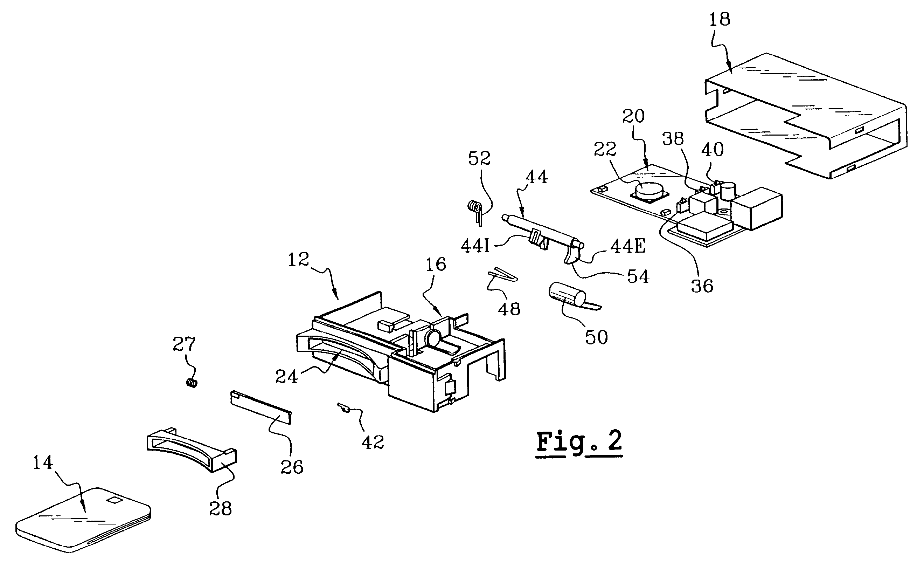

L'unité fixe 12 a une forme générale prismatique. En se référant plus particulièrement à la figure 2, on voit que l'unité fixe 12 comprend un support 16 logé dans un boîtier 18. Un circuit imprimé 20, portant plusieurs composants classiques, est fixé sur le support 16, à l'intérieur du boîtier 18. Parmi ces composants classiques, on reconnaît notamment des moyens d'échange de données à transpondeur comprenant une bobine d'induction 22 destinée à interagir de façon électromagnétique avec des moyens complémentaires agencés dans l'organe portatif.

En se référant notamment aux figures 2, 4 et 5, on voit que l'unité fixe est munie d'un tunnel 24 de logement de l'organe portatif 14 comprenant des parties proximale 24P et distale 24D séparées par un volet mobile 26. Ce dernier est rappelé élastiquement vers une position d'obturation de la partie distale 24D du tunnel par un ressort à effet angulaire 27 illustré sur la figure 2. Le volet 26 est déplacé vers une position ouverte d'accès à la partie distale 24D du tunnel, à l'encontre de la force élastique de rappel du ressort 27, par coopération avec l'extrémité distale de l'organe portatif 14 introduit dans le tunnel.

Chaque partie 24P, 24D du tunnel comprend une extrémité opposée au volet 26 qui débouche vers l'extérieur de l'unité fixe 12. On notera que l'unité fixe 12 est habituellement agencée dans la planche de bord ou la console de l'habitacle de façon à masquer à l'égard de l'utilisateur l'extrémité débouchante de la partie distale 24D du tunnel. L'extrémité débouchante de la partie proximale 24D du tunnel forme l'extrémité d'accès au tunnel par laquelle est introduit l'organe portatif 14.

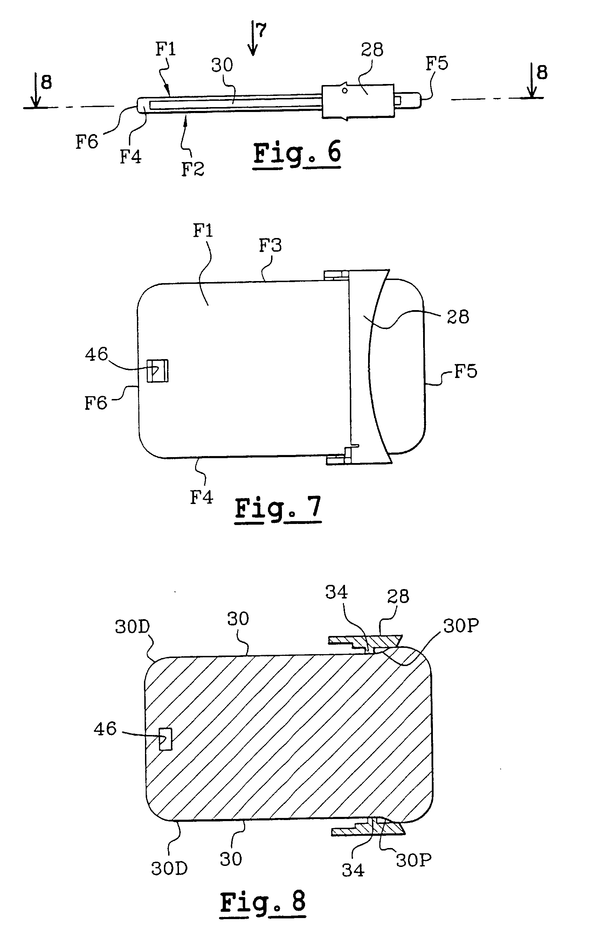

L'organe portatif 14, qui est représenté plus en détail sur les figures 6 à 8, a une forme générale prismatique mince délimitée par deux grandes faces longitudinales opposées F1, F2, deux petites faces longitudinales opposées F3, F4 et deux petites faces transversales opposées F5, F6 délimitant respectivement les extrémités proximales et distales de l'organe portatif.

Le tunnel 24 a une forme générale complémentaire de celle de l'organe portatif 14. Ainsi, chaque partie 24P, 24D du tunnel est délimitée par deux grandes parois longitudinales opposées PD1, PD2, PP1, PP2 et deux petites parois longitudinales opposées PD3, PD4, PP3, PP4. Les petites parois longitudinales PD3, PD4, PP3, PP4 de chaque partie 24P, 24D du tunnel sont parallèles aux petites faces F3, F4 de l'organe portatif 14 lorsque ce dernier est logé dans le tunnel 24. Les grandes parois longitudinales PD1, PD2, PP1, PP2 de chaque partie 24P, 24D du tunnel sont adjacentes aux petites parois PD3, PD4, PP3, PP4 et donc parallèles aux grandes faces F1, F2 de l'organe portatif 14 lorsque ce dernier est logé dans le tunnel 24.

De préférence, la partie proximale 24P du tunnel est délimitée par un organe translucide 28 de diffusion de lumière clairement représenté sur les figures 2, 3, 6 et 7.

En se référant notamment aux figures 1, 3 et 6, on voit qu'une rainure de guidage 30 est ménagée sur chaque petite face longitudinale F3, F4 de l'organe portatif 14. Cette rainure 30 est destinée à coopérer par emboîtement avec une nervure complémentaire 32 de guidage ménagée sur une petite paroi longitudinale correspondante PD3, PD4 de la partie distale 24D du tunnel.

Chaque petite paroi longitudinale PP1, PP2 de la partie proximale 24P du tunnel comprend un doigt racleur 34 destiné à coopérer avec une rainure de guidage correspondante 30 de l'organe portatif 14. Les doigts racleurs 34 sont de préférence venus de matière avec l'organe 28 de diffusion de lumière.

En se référant plus particulièrement à la figure 8, on voit que chaque rainure de guidage 30 de l'organe portatif 14 est muni d'une extrémité distale 30D débouchante et d'une extrémité proximale fermée 30P délimitée par un congé s'incurvant parallèlement aux grandes faces longitudinales F1, F2 de l'organe portatif14.

Les doigts racleurs 34 sont destinés à empêcher la pénétration de salissures dans la partie distale 24D du tunnel. En effet, les doigts racleurs 34, situés en amont du volet 26 par rapport au sens d'introduction de l'organe portatif 14, sont destinés à coopérer par emboîtement avec les rainures 30 de l'organe portatif 14 de façon à chasser les éventuelles salissures contenues dans ces rainures 30, avant que l'extrémité distale de l'organe portatif 14 franchisse le volet 26. Sous l'effet du raclage des doigts 34, les salissures éventuelles sont repoussées vers les extrémités proximales 30P des rainures de guidage, les congés facilitant l'évacuation des salissures de ces rainures.

L'extrémité proximale de l'organe portatif 14, destinée à saisir cet organe 14, est accessible en permanence depuis l'extérieur du tunnel 24, quelle que soit sa position dans le tunnel. Les rainures 30 de l'organe portatif et les doigts racleurs 34 du tunnel forment des moyens détrompeurs empêchant l'utilisateur d'introduire par erreur l'extrémité proximale de l'organe portatif dans le tunnel. En effet, les extrémités proximales fermées des rainures de guidage 30 empêchent l'emboîtement de ces rainures 30 avec les doigts racleurs 34 du tunnel et donc l'introduction erronée de l'extrémité proximale de l'organe portatif dans le tunnel 24.

Lors de l'introduction de l'organe portatif 14 dans le tunnel 24, les rainures 30 coopèrent tout d'abord avec les doigts racleurs 34 puis avec les nervures 32 pour guider cet organe portatif 14 dans le tunnel 24. Les frottements entre l'organe portatif 14 et les parois délimitant le tunnel 24 se limitent donc essentiellement aux frottements entre les surfaces délimitant, d'une part les rainures 30 et, d'autre part, les doigts racleurs 34 et les nervures de guidage 32. Ces surfaces, de faibles dimensions, sont peu ou pas visibles aux yeux de l'utilisateur ce qui préserve d'autant mieux l'aspect esthétique de l'organe portatif 14 en cas d'usure des surfaces de frottement.

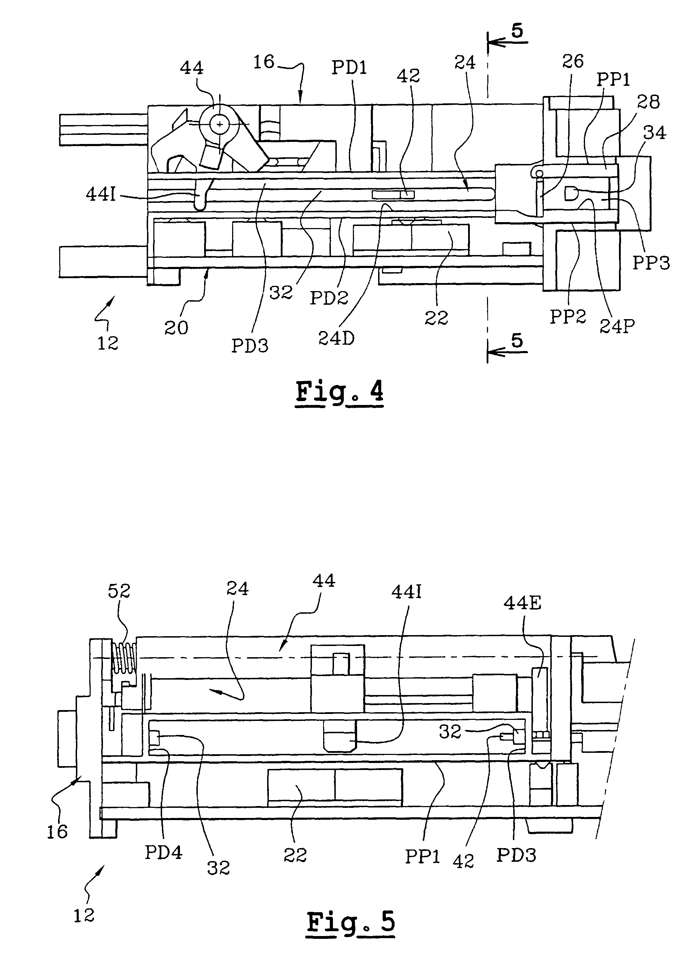

Par ailleurs, en considérant la figure 4, on notera que le circuit imprimé 20 est séparé du volume interne du tunnel 24 par la grande paroi longitudinale PD2 de la partie distale 24D du tunnel. La dimension longitudinale de cette grande paroi PD2 est telle que l'organe portatif 14 est toujours séparé du circuit imprimé 20 par cette grande paroi longitudinale PD2 quelque soit la position de l'organe portatif 14 dans la partie distale 24D du tunnel. De ce fait, la grande paroi PD2 séparant le circuit imprimé 20 du volume interne de la partie distale du tunnel 24 protège le circuit imprimé 20 des salissures pénétrant éventuellement dans la partie distale 24D du tunnel. De plus, les salissures éventuellement présentes dans la partie distale 24D du tunnel seront facilement évacuées de cette partie 24D par l'extrémité débouchante de cette dernière qui est entièrement ouverte vers l'extérieur de l'unité fixe 12. Les salissures sont chassées vers l'extérieur de l'unité 12, à travers l'extrémité débouchante de la partie distale 24D du tunnel, notamment par le déplacement de l'organe portatif 14 dans le tunnel 24.

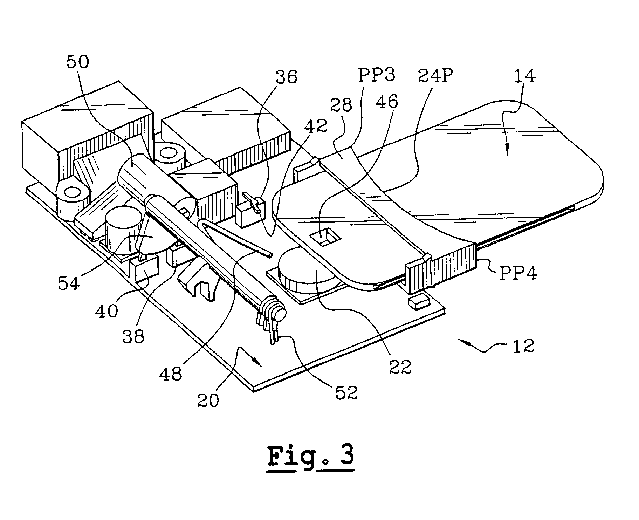

En se référant aux figures 2 et 3, on voit que le circuit imprimé 20 porte également trois contacteurs électriques 36 à 40 disposés successivement l'un derrière l'autre par rapport au sens d'introduction de l'organe portatif 14 dans le tunnel 24. Ces contacteurs électriques 36 à 40 sont de type classique à poussoir.

Le premier contacteur électrique 36, en considérant le sens d'introduction de l'organe portatif 14 dans le tunnel, est destiné à activer un état de mise sous tension d'accessoires du véhicule. Le deuxième contacteur électrique 38 est destiné à activer un état de marche du véhicule. Le troisième contacteur électrique 40 est destiné à faire démarrer ou arrêter le moteur du véhicule. Les trois contacteurs électriques seront appelés par la suite contacteurs d'accessoires 36, de marche 38 et de démarrage 40.

Les contacteurs électriques 36 à 40, extérieurs au tunnel 24, sont destinés à être actionnés par l'organe portatif 14 par l'intermédiaire de moyens qui seront décrits ci-dessous.

En se référant notamment aux figures 2 à 5, on voit que le contacteur d'accessoires 36 est actionné par l'intermédiaire d'un doigt de commande 42 faisant saillie dans le tunnel 24 à travers une petite paroi longitudinale PD3 délimitant la partie distale 24D de ce tunnel. En se référant plus particulièrement aux figures 4 et 5, on notera que le doigt de commande 42 fait saillie à travers la nervure de guidage 32 de la petite paroi PD3.

Le doigt de commande 42 est destiné à coopérer avec une rainure de guidage correspondante 30 de l'organe portatif 14. Le doigt de commande 42 forme donc un élément intermédiaire de renvoi permettant à l'organe portatif 14 se déplaçant dans le tunnel 24 d'actionner le contacteur d'accessoires 36 disposé à l'extérieur de ce tunnel 24.

L'organe portatif 14 est déplaçable longitudinalement dans le tunnel 24 depuis l'extrémité d'accès de ce tunnel vers une position stable d'actionnement du contacteur de marche 38, en passant par une position intermédiaire, généralement temporaire, d'actionnement du contacteur d'accessoires 36.

De façon classique, l'organe portatif 14 est maintenu dans sa position stable d'actionnement du contacteur de marche 38 par une bascule de blocage 44 montée rotative dans l'unité fixe 12 autour d'un axe transversal à la direction longitudinale de déplacement de l'organe portatif 14. La bascule de blocage est munie d'une partie 44E externe au tunnel 24 et d'une partie 441 interne à ce tunnel 24 destinée à coopérer avec l'organe portatif 14, plus particulièrement avec le bord d'un orifice 46 de cet organe portatif 14 débouchant dans chacune des grandes faces F1, F2 de cet organe 14. On notera que la bascule de blocage 44 s'étend à l'opposé du circuit imprimé 20 par rapport au tunnel 24, la partie interne 441 de la bascule s'étendant à travers la grande paroi longitudinale PD1 du tunnel 24 (voir notamment figure 4).

De façon classique, la bascule de blocage 44 est déplaçable entre deux positions, respectivement, de libération de l'organe portatif 14 et de coopération avec cet organe portatif 14. Dans cette dernière position, la bascule 44 bloque l'organe portatif 14 dans sa position stable par emboîtement d'un bras de la partie interne 441 de la bascule dans l'orifice 46 de cet organe portatif.

La bascule de blocage 44 est rappelée vers chacune de ces deux positions de libération et de coopération avec l'organe portatif par un ressort bistable classique 48, par exemple en forme générale d'épingle, comme cela est représenté sur les figures 2 et 3. Conformément à un fonctionnement classique, la bascule de blocage 44 permet d'obtenir un effet d'avalement de l'organe portatif 14 au moment où cet organe 14 atteint sa position stable d'actionnement du contacteur de marche 38.

Des moyens classiques 50 à électro-aimant (voir notamment figures 2 et 3) forment une butée amovible d'interdiction du retour de la bascule de blocage 44 de sa position de coopération avec l'organe portatif 14 (correspondant à la position stable de l'organe portatif 14) vers sa position de libération, afin d'empêcher que l'organe portatif 14 soit inopportunément retiré de l'unité fixe 12 lorsque le véhicule est dans un état de marche. Ces moyens 50 à électro-aimant sont activés de façon connue en soi, respectivement désactivés, de préférence lors du démarrage, respectivement de l'arrêt, du moteur du véhicule.

Pour plus de précisions sur les aspects classiques du fonctionnement de la bascule de blocage 44 on pourra se référer utilement aux documents FR-A-2 779 563 (FR-98 07250) et FR-A-2 786 297 (FR-98 14571).

Le démarrage et l'arrêt du moteur du véhicule sont commandés par l'organe portatif 14. En effet, l'organe portatif 14 est déplaçable longitudinalement dans le tunnel 24 jusqu'à une position instable d'actionnement du contacteur de démarrage 40 située au-delà de sa position stable par rapport à l'extrémité d'accès du tunnel 24. Entre ses positions stable et instable, l'organe portatif 14 est en prise avec la partie interne 44I de la bascule.

L'organe portatif 14 est rappelé depuis sa position instable vers sa position stable par des moyens élastiques comprenant de préférence un ressort 52 à effet angulaire agissant autour de l'axe de rotation de la bascule 44.

Ce ressort de rappel 52, illustré notamment sur les figures 2, 3 et 5, a également un effet de poussée, parallèlement à l'axe de rotation de la bascule 44, de manière à former une entretoise élastique de positionnement axial de la bascule 44.

Le ressort de rappel 52 est précontraint de manière à exercer sur la bascule 44, lorsque l'organe portatif 14 est dans sa position stable, un effort opposé et supérieur à celui du ressort bistable 48. De préférence, lorsque l'organe portatif 14 est dans sa position stable, le ressort de rappel 52 exerce un effort deux à trois fois supérieur à celui du ressort bistable 48.

En se référant notamment à la figure 3, on voit que les contacteurs électriques de marche 38 et de démarrage 40 sont actionnés par l'intermédiaire d'une came 54 solidaire de la partie externe 44E de la bascule.

Le véhicule étant à l'arrêt, pour faire démarrer le moteur de ce véhicule, l'utilisateur procède de la façon suivante.

Tout d'abord, l'utilisateur introduit l'organe portatif 14 dans l'extrémité d'accès du tunnel 24 et pousse cet organe portatif 14 vers l'extrémité distale du tunnel 24.

L'organe portatif 14, poussé dans le tunnel 24, coopère initialement avec le doigt de commande 42, de façon à actionner le contacteur d'accessoires 36, puis poursuit sa course jusqu'à sa position stable dans laquelle il est en prise avec la bascule 44. A cette position stable de l'organe portatif 14 correspond une position de la came 54 de la bascule dans laquelle cette came actionne le contacteur de marche 38. L'effet d'avalement évoqué plus haut et la résistance qu'oppose le ressort de rappel 52 au déplacement de l'organe portatif 14 (via la partie interne de la bascule 44) indiquent à l'utilisateur que l'organe portatif 14 a atteint sa position stable.

Pour commander le démarrage du moteur du véhicule, l'utilisateur pousse davantage l'organe portatif 14 vers l'extrémité distale du tunnel, en exerçant sur cet organe portatif 14 un effort suffisant pour vaincre la force élastique de rappel du ressort 52. L'organe portatif 14 atteint alors sa position instable qui est définie par exemple par la coopération de butées complémentaires de fin de course ménagées sur la partie interne 441 de la bascule et le support 16 de l'unité fixe 12. A la position instable de l'organe portatif 14 correspond une position de la came 54 de la bascule dans laquelle cette came actionne le contacteur de démarrage 40. Par ailleurs, lorsque l'organe portatif 14 atteint sa position instable, les moyens 50 à électroaimant, qui interdisent le retour de la bascule de blocage 44 vers sa position de libération de l'organe portatif, sont activés.

Après démarrage du moteur, l'utilisateur relâche l'organe portatif 14 qui est automatiquement rappelé par le ressort 52 vers sa position stable de marche du véhicule. En cas d'échec du démarrage du moteur, l'utilisateur repousse l'organe portatif 14 vers l'extrémité distale du tunnel autant de fois que cela est nécessaire pour obtenir le démarrage du véhicule.

Lorsque l'utilisateur souhaite arrêter le moteur du véhicule, il pousse à nouveau l'organe portatif 14 vers l'extrémité distale du tunnel, comme pour effectuer l'étape de démarrage décrite ci-dessus, de façon à actionner de nouveau le contacteur 40. Ceci à pour effet d'arrêter le moteur et de désactiver les moyens 50 à électroaimant, interdisant le retour de la bascule de blocage 44 vers sa position de libération de l'organe portatif. L'utilisateur relâche ensuite l'organe portatif 14, qui est automatiquement rappelé par le ressort 52 vers sa position stable, et retire le cas échéant l'organe portatif du tunnel 24 en le saisissant par son extrémité proximale qui fait saillie à l'extérieur de ce tunnel.

Parmi les avantages de l'invention, on notera que l'organe portatif permet de commander le démarrage ou l'arrêt du moteur du véhicule et ainsi d'éviter l'utilisation d'un bouton de commande supplémentaire dédié à ces fonctions.

## Revendications

1. Ensemble pour véhicule automobile destiné à échanger des données dont certaines sont représentatives d'au moins un utilisateur autorisé du véhicule, du type comprenant
- un organe portatif (14), formant un support pour les données représentatives d'au moins un utilisateur autorisé, et
- une unité fixe (12) d'échange de données, agencée dans le véhicule, destinée à assurer une fonction d'antivol par traitement de données, comprenant un tunnel (24) de logement de l'organe portatif (14) et un contacteur électrique (38) d'activation d'un état de marche du véhicule, dit contacteur de marche,
l'organe portatif (14) étant déplaçable longitudinalement dans le tunnel (24) depuis une extrémité d'accès de ce tunnel (24) vers une position stable d'actionnement du contacteur de marche (38),
- l'unité fixe d'échange de données (12) comprenant également :
- un contacteur électrique (40) d'activation d'un état de démarrage ou d'arrêt d'un moteur du véhicule, dit contacteur de démarrage, l'organe portatif (14) étant déplaçable longitudinalement dans le tunnel (24) jusqu'à une position instable d'actionnement du contacteur de démarrage (40) située au delà de la position stable par rapport à l'extrémité d'accès du tunnel, et
- des moyens (52) de rappel élastique de l'organe portatif (14) depuis sa position instable vers sa position stable,
**caractérisé en ce que** l'unité d'échange de données (12) comprend une bascule (44) de blocage de l'organe portatif (14) dans le tunnel (24), montée rotative dans l'unité d'échange de données (12) autour d'un axe transversal à la direction longitudinale de déplacement de l'organe portatif (14), munie d'une partie (441) interne au tunnel, coopérant avec l'organe portatif (14) dans ses positions stable et instable, et d'une partie (44E) externe au tunnel, les moyens de rappel comprenant un ressort de rappel (52) à effet angulaire agissant autour de l'axe de rotation de la bascule (44).

2. Ensemble selon la revendication 1, **caractérisé en ce que** le ressort de rappel (52) a également un effet de poussée parallèlement à l'axe de rotation de la bascule (44) pour le positionnement axial de cette bascule (44).

3. Ensemble selon la revendication 1 ou 2, **caractérisé en ce que** la bascule (44) est déplaçable entre deux positions respectivement de libération de l'organe portatif (14) et de coopération avec cet organe portatif (14) vers chacune desquelles elle est rappelée élastiquement par un ressort bistable (48), le ressort de rappel (52) étant précontraint et exerçant sur la bascule (44) un effort opposé et supérieur à celui du ressort bistable (48), lorsque l'organe portatif (14) est dans sa position stable.

4. Ensemble selon la revendication 3, **caractérisé en ce que** le ressort de rappel (52) exerce un effort deux à trois fois supérieur à celui du ressort bistable (48), lorsque l'organe portatif (14) est dans sa position stable.

5. Ensemble selon l'une quelconque des revendications 1 à 4, **caractérisé en ce que** le contacteur électrique de démarrage (40) est actionné par l'organe portatif (14) par l'intermédiaire de la partie externe (44E) de la bascule (44) de blocage.

6. Ensemble selon l'une quelconque des revendications 1 à 5, **caractérisé en ce que** le contacteur électrique (38) d'activation d'un état de marche du véhicule est actionné par l'organe portatif (14) par l'intermédiaire de la partie externe (44E) de la bascule (44) de blocage.

7. Ensemble selon l'une quelconque des revendications précédentes, **caractérisé en ce que** l'unité d'échange de données (12) comprend un contacteur électrique (36), extérieur au tunnel, d'activation d'un état de mise sous tension d'accessoires du véhicule actionné par l'organe portatif (14) par l'intermédiaire d'un élément de commande (42) faisant saillie dans le tunnel.

## Patentansprüche

1. Vorrichtung für Kraftfahrzeuge, die dazu bestimmt ist, Daten auszutauschen, von denen bestimmte repräsentativ für mindestens einen berechtigten Kraftfahrzeug-Benutzer sind, vom Typ mit:
- einem tragbaren Organ (14), das einen Datenträger für die Daten bildet, die für mindestens einen berechtigten Benutzer repräsentativ sind, und
- einer festen Datenaustauscheinheit (12), die im Fahrzeug angeordnet und dazu bestimmt ist, eine Diebstahlschutzfunktion durch Datenverarbeitung zu gewährleisten, und einen Schacht (24) zum Aufnehmen des tragbaren Organs (14) und einen elektrischen Kontaktgeber (38), den sogenannten Betriebskontaktgeber, zum Aktivieren eines Betriebszustands des Fahrzeugs enthält,
wobei das tragbare Organ (14) in dem Schacht (24) in Längsrichtung von einem Zugangsende dieses Schachts (24) zu einer stabilen Stellung zum Betätigen des Betriebskontaktgebers (38) verlagerbar ist,
- wobei die feste Datenaustauscheinheit (12) auch enthält:
- einen elektrischen Kontaktgeber (40), den sogenannten Anlasskontaktgeber, zum Aktivieren eines Anlass- bzw. Abstellzustands eines Fahrzeugmotors, wobei das tragbare Organ (14) im Schacht (24) in Längsrichtung in eine instabile Stellung zum Betätigen des Anlasskontaktgebers (40) verlagerbar ist, die sich bezüglich des Schachtzugangsendes jenseits der stabilen Stellung befindet, und
- Mittel (52) zur federnden Rückstellung des tragbaren Organs (14) aus seiner instabilen Stellung in seine stabile Stellung,
**dadurch gekennzeichnet, dass** die Datenaustauscheinheit (12) einen Kippschalter (44) zum Sichern des tragbaren Organs (14) im Schacht (24) enthält, der in der Datenaustauscheinheit (12) um eine quer zur Verlagerungslängsrichtung des tragbaren Organs (14) verlaufenden Achse drehbar gelagert ist, mit einem innerhalb des Schachts liegenden Teil (44I) versehen ist, das mit dem tragbaren Organ (14) in dessen stabiler und instabiler Stellung zusammenwirkt, sowie mit einem außerhalb des Schachts liegenden Teil (44E), wobei die Rückstellmittel eine Rückstellfeder (52) mit Winkelwirkung enthalten, die um die Drehachse des Kippschalters (44) wirkt.

2. Vorrichtung nach Anspruch 1, **dadurch gekennzeichnet, dass** die Rückstellfeder (52) auch eine Schiebewirkung parallel zur Drehachse der Wippe (44) für die axiale Positionierung dieses Kippschalters (44) hat.

3. Vorrichtung nach Anspruch 1 oder 2, **dadurch gekennzeichnet, dass** die Wippe (44) zwischen zwei Stellungen zum Freigeben des tragbaren Organs (14) bzw. zum Zusammenwirken mit diesem tragbaren Organ (14) verstellbar ist, in die sie jeweils über eine bistabile Feder (48) elastisch zurückgestellt wird, wobei die Rückstellfeder (52) vorgespannt ist und dann, wenn das tragbare Organ (14) sich in seiner stabilen Stellung befindet, auf die Wippe (44) eine Kraft ausübt, die derjenigen der bistabilen Feder (48) entgegengesetzt und größer als diese ist.

4. Vorrichtung nach Anspruch 3, **dadurch gekennzeichnet, dass** dann, wenn das tragbare Organ (14) sich in seiner stabilen Stellung befindet, die Rückstellfeder (52) eine Kraft ausübt, die zwei bis drei mal so groß ist wie die der bistabilen Feder (48).

5. Vorrichtung nach einem der Ansprüche 1 bis 4, **dadurch gekennzeichnet, dass** der elektrische Anlasskontaktgeber (40) mittels des äußeren Teils (44E) der Sicherungswippe (44) von dem tragbaren Organ (14) betätigt wird.

6. Vorrichtung nach einem der Ansprüche 1 bis 5, **dadurch gekennzeichnet, dass** der elektrische Kontaktgeber (38) zum Aktivieren eines Betriebszustands des Fahrzeugs mittels des äußeren Teils (44E) der Sicherungswippe (44) von dem tragbaren Organ (14) betätigt wird.

7. Vorrichtung nach einem der vorangehenden Ansprüche, **dadurch gekennzeichnet, dass** die Datenaustauscheinheit (12) einen außerhalb des Schachts liegenden elektrischen Kontaktgeber (36) zum Aktivieren eines Zustands zum Unterspannungsetzen von Zusatzgeräten des Fahrzeugs enthält, der von dem tragbaren Organ (14) mittels eines Steuerelements (42) betätigt wird, das in den Schacht vorsteht.

## Claims

1. Assembly for a motor vehicle intended to exchange data, some of which represent at least one authorised user of the vehicle, of the type comprising
- a portable device (14), forming a medium for the data representing at least one authorised user, and
- a fixed data exchange unit (12), arranged in the vehicle, intended to fulfil an anti-theft function by data processing, comprising a tunnel (24) for housing the portable device (14) and an electrical contactor (38) for activating a running state of the vehicle, referred to as the running contactor,
the portable device (14) being able to move longitudinally in the tunnel (24) from an access end of this tunnel (24) towards a stable position of actuation of the running contactor (38),
- the fixed data exchange unit (12) also comprising:
- an electrical contactor (40) for activating a state of starting or stopping the engine of the vehicle, referred to as the starting contactor, the portable device (14) being able to move longitudinally in the tunnel (24) as far as an unstable position of actuation of the starting contactor (40) situated beyond the stable position with respect to the access end of the tunnel, and
- means (52) of elastic return of the portable device (14) from its unstable position to its stable position,
**characterised in that** the data exchange unit (12) comprises a rocker (44) for locking the portable device (14) in the tunnel (24), mounted so as to rotate in the data exchange unit (12) about an axis transverse to the longitudinal direction of movement of the portable device (14), provided with a part (44I) internal to the tunnel, cooperating with the portable device (14) in its stable and unstable positions, and a part (44E) external to the tunnel, the return means comprising an angular-effect return spring (52) acting around the rotation axis of the rocker (44).

2. Assembly according to Claim 1, **characterised in that** the return spring (52) also has a thrust effect parallel to the rotation axis of the rocker (44) for the axial positioning of this rocker (44).

3. Assembly according to Claim 1 or 2, **characterised in that** the rocker (44) is able to move between two positions respectively of release of the portable device (14) and of cooperation with this portable device (14), towards each of which it is elastically returned by a bistable spring (48), the return spring (52) being prestressed and exerting on the rocker (44) a force opposite to and greater than that of the bistable spring (48), when the portable device (14) is in its stable position.

4. Assembly according to Claim 3, **characterised in that** the return spring (52) exerts a force two to three times greater than that of the bistable spring (48), when the portable device (14) is in its stable position.

5. Assembly according to any one of Claims 1 to 4, **characterised in that** the electrical starting contactor (40) is actuated by the portable device (14) by means of the external part (44E) of the locking rocker (44).

6. Assembly according to any one of Claims 1 to 5, **characterised in that** the electrical contactor (38) for activating a running state of the vehicle is actuated by the portable device (14) by means of the external part (44E) of the locking rocker (44).

7. Assembly according to any one of the preceding claims, **characterised in that** the data exchange unit (12) comprises an electrical contactor (36), external to the tunnel, for activating a state of powering accessories of the vehicle actuated by the portable device (14) by means of a control element (42) projecting into the tunnel.
